# EUROPÄISCHE PATENTSCHRIFT

(11) **EP 0 710 520 B1**
(45) Veröffentlichungstag und Bekanntmachung des Hinweises auf die Patenterteilung: **18.07.2001**
(21) Anmeldenummer: 95105407.1
(22) Anmeldetag: 10.04.1995
(51) Int. Cl.: B23B 31/12

(54) **Bohrfutter**
Drill chuck
Mandrin porte-foret

(30) Priorität: 31.10.1994 DE 4438991
(43) Veröffentlichungstag der Anmeldung: 08.05.1996
(73) Patentinhaber: Röhm, Günter Horst, D-89567 Sontheim (DE)
(72) Erfinder: Röhm, Günter Horst, D-89567 Sontheim (DE)
(74) Vertreter: Fay, Hermann, Dipl.-Phys. Dr.

(56) Entgegenhaltungen:
- DE-A- 2 341 642
- DE-C- 4 313 742

## Beschreibung

Die Erfindung betrifft ein Bohrfutter, insbesondere zum Schlagbohren, mit einem an eine Bohrspindel anschließbaren Futterkörper, mit zwischen sich eine Aufnahme für das Bohrwerkzeug bildenden Spannbacken, die in im Futterkörper geneigt zur Futterachse verlaufenden, mit ihrer rückwärtigen Mündung die Umfangsfläche des Futterkörpers anschneidenden Führungskanälen verschiebbar sind und in der Mündung der Führungskanäle zum Öffnen und Schließen des Bohrfutters über eine Verzahnung mit dem Spanngewinde eines am Futterkörper drehbar und axial unverschiebbar geführten Spannrings im Eingriff stehen, zu dessen Betätigung eine koaxiale, ebenfalls axial unverschiebbare Spannhülse vorgesehen ist, ferner mit einer Sperreinrichtung für den Spannring, bestehend aus einem koaxialen Kranz von Sperrausnehmungen und aus mindestens einem Sperrglied, das unter Federkraft in die Sperrausnehmungen eingerückt ist, wobei das Sperrglied und die Sperrausnehmung einander in derart geneigten Flankenflächen anliegen, daß diese den Spannring in der dem Öffnen des Bohrfutters entsprechenden Drehrichtung gegen Verdrehen sperren, beim Verdrehen des Spannrings in der entgegen gesetzten, also dem Schließen des Bohrfutters entsprechenden Drehrichtung aber das Sperrglied gegen die Federkraft aus den Sperrausnehmungen herausdrücken und dadurch von Sperrausnehmung zu Sperrausnehmung verrutschen lassen, und wobei das Sperrglied zwischen dem an den Sperrausnehmungen eingerückten Zustand und einem aus den Sperrausnehmungen ausgerückten Zustand verstellbar ist.

Bohrfutter dieser Art sind aus DE 43 13 742 C1 bekannt. Bei diesen bekannten Bohrfuttern sind der Spannring und die Spannhülse unverdrehbar miteinander verbunden und die Sperreinrichtung ist zwischen der Spannhülse und dem Futterkörper wirksam. Zur Verstellung des Sperrglieds in den an den Sperrausnehmungen eingerückten Zustand ist ein am Futterkörper drehbar geführter, koaxialer Stellring vorgesehen. Zum Spannen oder Lösen des Bohrfutters bedarf es der Betätigung sowohl der Spannhülse als auch des Stellrings, also der Handhabung des Bohrfutters mit zwei Händen.

Der Erfindung liegt die Aufgabe zugrunde, ein Bohrfutter der eingangs genannten Art auf möglichst einfache Weise so auszubilden, daß es zum Spannen und Lösen einfacher, nämlich nur an einem einzigen Teil und damit mit nur einer einzigen Hand, betätigt werden kann, und daß die Sperreinrichtung in der Lage ist, das gespannte Bohrfutter auch bei größeren, im Bohrbetrieb auftretenden Schwingungsbeanspruchungen zuverlässig gegen die Gefahr eines selbsttätigen Lösens zu sichern.

Diese Aufgabe kann bei einem Bohrfutter mit den eingangs genannten Merkmalen erfindungsgemäß auf zweierlei Weisen gelöst werden.

Die erste Lösung ist dadurch gekennzeichnet, daß die Spannhülse relativ zum Spannring verdrehbar ist und Anschläge vorgesehen sind, welche die Verdrehung der Spannhülse relativ zum Spannring in beiden Drehrichtungen begrenzen, daß der Kranz der Sperrausnehmungen an einem den Futterkörper im Mündungsbereich der Führungskanäle drehfest umschließenden, die Mündungen der Führungskanäle überbrückenden Körperring angeordnet und das Sperrglied am Spannring vorgesehen ist, daß ferner zur Steuerung des Sperrglieds an der Spannhülse eine Steuerkurve ausgebildet ist, so daß sich das Sperrglied durch Verdrehen der Spannhülse relativ zum Spannring in der dem Schließen des Bohrfutters entsprechenden Drehrichtung aus dem ausgerückten Zustand in den eingerückten Zustand und umgekehrt verstellt, und daß zwischen der Spannhülse und dem Spannring eine Rasteinrichtung vorhanden ist, die in Umfangsrichtung zwei Raststellungen aufweist, wobei sich in der einen Raststellung das Sperrglied in derjenigen Stellung, die dem an den Sperrausnehmungen eingerückten Zustand entspricht, und in der anderen Raststellung in der dem ausgerückten Zustand entsprechenden Stellung befindet. Vorzugsweise ist der Körperring als am Futterkörper unverdrehbar gehaltener Lagerring ausgebildet, gegen den der Spannring auf der dem Bohrspindelanschluß zugewandten Seite axial abgestützt ist.

Die zweite Lösung ist dadurch gekennzeichnet, daß die Spannhülse relativ zum Spannring verdrehbar ist und Anschläge vorgesehen sind, welche die Verdrehung der Spannhülse relativ zum Spannring in beiden Drehrichtungen begrenzen, daß der Kranz der Sperrausnehmungen am Futterkörper im Mündungsbereich der Führungskanäle angeordnet ist und durch deren Mündungen Unterbrechungen aufweist, daß das Sperrglied am Spannring in zweifacher Anordnung vorgesehen ist, wobei die beiden Sperrglieder, bezogen auf die Futterachse, in Umfangsrichtung um einen Winkel gegeneinander versetzt sind, der sich von dem entsprechenden Winkel zwischen den Führungskanälen so unterscheidet, daß immer eines der Sperrglieder den Sperrausnehmungen gegenüber steht, wenn sich das jeweils andere Sperrglied an einer der Unterbrechungen im Kranz der Sperrausnehmungen befindet, daß ferner zur Steuerung der Sperrglieder an der Spannhülse je eine Steuerkurve ausgebildet ist, so daß sich die Sperrglieder durch Verdrehen der Spannhülse relativ zum Spannring in der dem Schließen des Bohrfutters entsprechenden Drehrichtung aus dem ausgerückten Zustand in den eingerückten Zustand und umgekehrt verstellen, und daß zwischen der Spannhülse und dem Spannring eine Rasteinrichtung vorhanden ist, die in Umfangsrichtung zwei Raststellungen aufweist, wobei sich in der einen Raststellung die Sperrglieder in derjenigen Stellung, die dem an den Sperrausnehmungen eingerückten Zustand entspricht, und in der anderen Raststellung in der dem ausgerückten Zustand entsprechenden Stellung befinden.

Bei beiden erfindungsgemäßen Lösungen dient die Spannhülse sowohl zur Verstellung des Sperrglieds als auch zur spannenden und lösenden Verstellung der Spannbacken, wobei ersteres entlang dem Drehweg erfolgt, um den die Spannhülse gegenüber dem Spannring zwischen den Anschlägen verdrehbar ist. Die Rasteinrichtung hat dabei den Zweck, selbsttätige und ungewünschte Drehungen der Spannhülse gegenüber dem Spannring zu verhindern, insbesondere sicher zu stellen, daß bei offenem Bohrfutter der Spannring von der Spannhülse beim Verdrehen mitgenommen wird, ohne daß das Sperrglied in den eingerückten Zustand verstellt wird, bzw. bei gespanntem Bohrfutter sich die Spannhülse gegenüber dem Spannring nicht so verdrehen kann, daß das Sperrglied in den ausgerückten Zustand übergeht. Die Betätigung des erfindungsgemäßen Bohrfutters ist allein durch die Spannhülse möglich, die nur verdreht zu werden und sogar nur noch allein für die Hand zugänglich zu sein braucht, um das Futter zu schließen, zu spannen und zu sperren, bzw. zu entsperren, zu lösen und zu öffnen, was die Handhabung im Vergleich zu den bekannten Bohrfuttern wesentlich vereinfacht, vor allem dann, wenn das Spannen und Lösen des Bohrfutters mit Hilfe des Bohrmaschinenantriebs über die Bohrspindel erfolgen soll und dabei nur eine Hand zum Halten der Spannhülse frei ist. Um bei diesem Futteraufbau eine möglichst zuverlässige Wirkung der Sperreinrichtung zu erhalten, sollte der Kranz der Sperrausnehmungen axial dicht neben dem Spanngewinde des Spannrings angeordnet sein. Denn dann kann der Kranz der Sperrausnehmungen größeren Durchmesser erhalten, so daß höhere Sperrmomente aufgenommen werden können, ohne daß der festliegende Außendurchmesser des Bohrfutters entsprechend vergrößert werden müßte, und außerdem ergibt eine dichte axiale Nachbarschaft von Spanngewinde und Sperrausnehmungen, daß der einerseits im Spanngewinde von den Spannbacken und andererseits an den Sperrausnehmungen vom Sperrglied beaufschlagte Spannring geringeren Kippbeanspruchungen ausgesetzt ist. Jedoch entsteht in diesem Zusammenhang die Schwierigkeit, daß der Kranz der Sperrausnehmungen bei axial geringem Abstand vom Spanngewinde am Futterkörper in einen Bereich kommen würde, in dem bereits die Führungskanäle für die Spannbacken an der Umfangsfläche des Futterkörpers ausmünden und diese Mündungen den Kranz der Sperrausnehmungen unterbrechen würden, so daß in Drehstellungen des Spannrings, in welchen sich das Sperrglied an der Stelle einer solchen Unterbrechung im Kranz der Sperrausnehmungen befände, die Sperreinrichtung überhaupt nicht wirksam werden könnte. Die beiden erfindungsgemäßen Lösungen unterscheiden sich allein darin, wie diese Schwierigkeit durch die Erfindung ausgeräumt wird, nämlich bei der ersten Lösung durch die Überbrückung der Unterbrechungen mit Hilfe des die Sperrausnehmungen tragenden Körperrings und bei der zweiten Lösung durch die Anordnung von mindestens zwei Sperrgliedern, von welchen in jeder Drehstellung des Spannrings immer mindestens eines an den Sperrausnehmungen zum Eingriff kommen kann. Im Ergebnis kann nach der einen oder anderen dieser beiden Möglichkeiten erfindungsgemäß der Kranz der Sperrausnehmungen im Mündungsbereich der Führungskanäle am Futterkörper angeordnet und insbesondere auch auf der dem Bohrspindelanschluß zugewandten Seite des Spanngewindes am Futterkörper vorgesehen sein.

In einer besonders bevorzugten Ausführungsform der Erfindung weist der Spannring einen eine Führung für die Spannhülse bildenden koaxialen Zwischenring auf, der die spannringseitigen Teile der Anschläge für die Spannhülse, der Sperreinrichtung und der Rasteinrichtung trägt und ein Kragenteil umfaßt, das den das Spanngewinde tragenden Teil des Spannrings drehfest umschließt. Dabei kann auf sehr einfache Weise die an sich bekannte, aus herstellungs- und montagetechnischen Gründen besonders vorteilhafte Möglichkeit verwirklicht werden, daß der das Spanngewinde tragende Teil des Spannrings aus zwei Ringhälften besteht, die durch das Kragenteil am Futterkörper zusammengehalten sind.

Eine weiter bevorzugte Ausführungsform des erfindungsgemäßen Bohrfutters ist dadurch gekennzeichnet, daß für die Anschläge zwischen der Spannhülse und dem Spannring mindestens ein Anschlagstück am einen Teil, d. h. Spannring oder Spannhülse, und eine das Anschlagstück aufnehmende Aussparung am anderen Teil vorgesehen sind, wobei das Anschlagstück an den Enden des Drehwegs jeweils mit einer der die Aussparung in Umfangsrichtung begrenzenden beiden Stirnflächen zum Anschlag kommt. Im einzelnen kann bei einem Spannring mit Zwischenring das Anschlagstück als Wandstück des Zwischenrings ausgebildet sein, das vom Rand des Zwischenrings axial in die auf der Wandinnenseite der Spannhülse ausgebildete Aussparung vorsteht.

Das Sperrglied ist vorzugsweise an einem sich in Umfangsrichtung erstreckenden Federarm des Spannrings ausgebildet, wobei der Federarm im eingerückten Zustand des Sperrglieds der Steuerkurve in einem Abstand vom Sperrglied anliegt, der das Durchfedern des Federarms an der Stelle des Sperrglieds um dessen Eingriffstiefe in die Sperrausnehmungen ermöglicht.

Hinsichtlich der Rasteinrichtung ist eine bevorzugte Ausführungsform des erfindungsgemäßen Bohrfutters dadurch gekennzeichnet, daß die Rasteinrichtung von in den Raststellungen miteinander zum Eingriff kommenden Rastelementen, d. h. Rastglied oder Rastaufnahme, am Spannring und an der Spannhülse gebildet ist, und daß der Zwischenring mindestens einen sich in Umfangsrichtung erstreckenden Federsteg trägt, an dem sich mindestens eines der Rastelemente befindet.

Eine besonders vorteilhafte Ausführungsform ist dadurch gekennzeichnet, daß der Federsteg und der Federarm von einem sich in Umfangsrichtung erstreckenden und drehschlüssig mit dem Spannring verbundenen Federbügel gebildet sind, an dem zwei in Umfangsrichtung in gegenseitigem Abstand befindliche Vorsprünge vorgesehen sind, von denen der sperrgliedseitige Vorsprung die Anlage des Federarms an der Steuerkurve, der andere Vorsprung das Rastglied der Rasteinrichtung bildet, deren Rastaufnahmen an der Spannhülse ausgebildet sind. Dabei kann in bevorzugter Ausführungsform der Federbügel durch ein Federband und das Sperrglied unmittelbar durch das rückwärtige Ende des Federbandes gebildet sein, gesehen in der dem Schließen des Bohrfutters entsprechenden Drehrichtung der Spannhülse. Zweckmäßigerweise sind die Vorsprünge als Auswölbungen an das Federband angebogen.

Eine erste Möglichkeit zur Anordnung der Federbügel ist dadurch gekennzeichnet, daß der Federbügel in einem zwischen dem Spannring und der Spannhülse in Umfangsrichtung verlaufenden Schlitz angeordnet und am Spannring formschlüssig gegen Verdrehen gesichert ist. Dabei bestehen im einzelnen die Möglichkeiten, daß der Federbügel mit zur Futterachse paralleler Ausrichtung der Federbandfläche im Schlitz liegt und die Sperrausnehmungen axial an einer futterkörperseitigen kreiszylindrischen Umfangsfläche verlaufen, oder daß der Federbügel mit zur Futterachse radialer Ausrichtung der Federbandfläche im Schlitz liegt und die Sperrausnehmungen radial an einer futterkörperseitigen, zur Futterachse senkrechten Ringfläche verlaufen. Handelt es sich insbesondere um einen Spannring mit Zwischenring, kann dieser zweckmäßigerweise mit Zungen den Federbügel axial in Öffnungen durchsetzen, deren Ränder in Umfangsrichtung den Zungen anliegen, so daß sich der Federbügel nicht gegenüber dem Zwischenring verdrehen kann.

Eine andere vorteilhafte Möglichkeit für die Anordnung des Federbügels ist bei einem Spannring mit Zwischenring dadurch gekennzeichnet, daß der mit seiner Federbandfläche parallel zur Futterachse ausgerichtete Federbügel in einem in Umfangsrichtung zwischen dem Futterkörper und dem Zwischenring verlaufenden Ringschlitz liegt, der futterkörperseitig vom Kranz der axial verlaufenden Sperrausnehmungen begrenzt ist, und daß der Federbügel mit auswärts gerichteter Vorspannung dem Zwischenring anliegt und mit seinen beiden Vorsprüngen den Zwischenring in Fenstern auswärts durchgreift, in denen der Federbügel gegen Verdrehen festgehalten ist. Im einzelnen empfiehlt es sich, daß der Ringschlitz radial breiter als der Federbügel dick ist, daß der Federbügel mit einem etwa mittig zwischen den beiden Vorsprüngen befindlichen Scheitelbereich radial auswärts am Zwischenring abgestützt ist und zwischen diesem Scheitelbereich und den beiden Vorsprüngen je einen Federsteg zur tangentialen Anlage am Kranz der Sperrausnehmungen bildet. Zweckmäßigerweise trägt dabei der das Rastglied bildende Vorsprung an seiner dem Scheitelbereich des Federbügels abgewandten Seite einen dem Kranz der Sperrausnehmungen unter Vorspannung tangential anliegenden Federschenkel. Weiter empfiehlt es sich, daß der Federbügel im Scheitelbereich zwischen seinen beiden Vorsprüngen einen dritten, den Zwischenring in einem weiteren Fenster nach außen durchgreifenden Vorsprung aufweist, der in eine auf der Wandinnenseite der Spannhülse vorgesehene Nut greift, die sich in Umfangsrichtung mindestens über den maximal möglichen Verdrehungsweg der Spannhülse gegenüber dem Spannring erstreckt und mit mindestens einer ihrer Seitenwände eine axiale Anlage für den Vorsprung bildet, wodurch die Spannhülse gegen Axialverschiebung am Spannring gesichert ist. Dann liegen diese Sicherung, der Sperreingriff des Sperrglieds in die Sperrausnehmungen und der Rasteingriff des Rastglieds in die Rastaufnahmen sämtlich in derselben, zur Futterachse senkrechten Ebene, was eine völlig symmetrische, Kippmomente vermeidende Beanspruchung der beteiligten Teile ergibt. Diese Vorteile werden noch weiter durch die tangentiale Anlage der Federstege und des Federschenkels am Kranz der Sperrausnehmungen gefördert, die gemeinsam eine sehr präzise Ausrichtung des Federbügels am Spannring in Bezug auf den Kranz der Sperrausnehmungen einerseits und auf die Rastaufnahmen andererseits und damit sehr genaue Werte für die Federkräfte ergeben, mit denen der Federbügel das Sperrglied im Sperreingriff und das Rastglied im Rastsitz hält.

Im folgenden wird die Erfindung an in der Zeichnung dargestellten Ausführungsbeispielen näher erläutert; es zeigen:
- Fig. 1: ein Bohrfutter nach der Erfindung, teils im Axialschnitt, teils in Seitenansicht, jeweils in der Stellung der Spannbacken bei geringstem Spanndurchmesser und im ungesperrten Futterzustand,
- Fig. 2: den Schnitt II - II in Fig. 1,
- Fig. 3: den Schnitt III - III in Fig. 1, und zwar in der Teilfig. 3.1 im ungesperrten, in der Teilfig. 3.2 im gesperrten Futterzustand,
- Fig. 4: eine andere Ausführungsform des Bohrfutters nach der Erfindung in einer der Fig. 1 entsprechenden Darstellung,
- Fig. 5: den Schnitt V - V in Fig. 4, und zwar im ungesperrten Futterzustand,
- Fig. 6: eine andere Ausführungsform des erfindungsgemäßen Bohrfutters in einer der Fig. 1 entsprechenden Darstellung,
- Fig. 7: den Schnitt VII - VII in Fig. 6, und zwar in der Teilfig. 7.1 im ungesperrten, in der Teilfig. 7.2 im gesperrten Futterzustand,
- Fig. 8: eine weitere Ausführungsform des erfindungsgemäßen Bohrfutters in einer der Fig. 1 entsprechenden Darstellung,
- Fig. 9: den Schnitt IX - IX in Fig. 8, und zwar in der Teilfig. 9.1 im ungesperrten, in der Teilfig. 9.2 im gesperrten Futterzustand,
- Fig. 10: eine nochmals andere Ausführungsform des Bohrfutters nach der Erfindung in einer der Fig. 1 entsprechenden Darstellung,
- Fig. 11: den Schnitt XI - XI in Fig. 10,
- Fig. 12: den Schnitt XII - XII in Fig. 10 in einer Abwicklung in Umfangsrichtung, und zwar in der Teilfig. 12.1 im ungesperrten, in der Teilfig. 12.2 im gesperrten Futterzustand.

Die in der Zeichnung dargestellten Bohrfutter dienen zur Aufnahme eines nicht dargestellten Bohrers und besitzen je einen Futterkörper 1 zum Anschluß an eine ebenfalls nicht dargestellte Bohrspindel. Zum Anschluß der Bohrspindel besitzt der Futterkörper 1 eine Gewindeaufnahme 2, an die sich nach vorne ein ebenfalls nicht dargestellter axialer Durchgang anschließen kann, durch den hindurch die Schläge eines in der hohlen Drehspindel verschiebbar geführten Schlägers oder Döppers unmittelbar auf das Schaftende des in der Werkzeugaufnahme 4 des Bohrfutters gehaltenen Bohrers übertragen werden können. Die Bohrfutter besitzen den Bohrer zentrierende, axial führende und/oder einspannende Spannbacken 5, die in der zur Futterachse 3 koaxialen Werkzeugaufnahme 4 zentrisch zur Futterachse verstellbar und dabei in im Futterkörper 1 geneigt zur Futterachse 3 verlaufenden Führungskanälen 43 geführt sind, welche mit ihrer rückwärtigen Mündung 44 die Umfangsfläche des Futterkörpers 1 anschneiden. In diesen Mündungen 44 greifen die Spannbacken mit einer Verzahnung 6 in ein Spanngewinde 7 eines Spannrings 8, der am Futterkörper 1 axial unverschiebbar und drehbar geführt ist und zum Spannen und Lösen des Futters mit Hilfe einer ebenfalls axial unverschiebbaren Spannhülse 9 von Hand relativ zum Futterkörper 1 verdreht werden kann. Der Spannring 8 ist axial nach hinten über ein Kugellager 22 und einen Lagerring 21 am Futterkörper 1 abgestützt. Um unerwünschte Verstellungen der Spannbacken 5 zu verhindern, kann die Drehstellung des Spannrings 8 fixiert werden. Dazu dient eine allgemein mit 11 bezeichnete und zwischen dem Spannring 8 und dem Futterkörper 1 ausgebildete Sperreinrichtung, die aus einem koaxialen Kranz von Sperrausnehmungen 10 auf der Seite des Futterkörpers 1 und aus mindestens einem Sperrglied 12 besteht, das unter Federkraft in die Sperrausnehmungen 10 greift. Dabei liegen das Sperrglied 12 und die es aufnehmenden Sperrausnehmungen 10 einander in derart geneigten Flankenflächen 13', 13" an, daß diese den Spannring 8 in der dem Öffnen des Bohrfutters entsprechenden Drehrichtung (Pfeil 14) gegen Verdrehen verriegeln, beim Verdrehen des Spannrings 8 von Hand mit einem dazu ausreichend großen Drehmoment in der entgegen gesetzten, also dem Schließen des Bohrfutters entsprechenden Drehrichtung (Pfeil 15) das Sperrglied 12 aber gegen die Federkraft aus den Sperrausnehmungen 10 herausdrücken und von Sperrausnehmung zu Sperrausnehmung entlang dem Umfang des Futterkörpers 1 verrutschen lassen. Unter den im Bohrbetrieb auftretenden Schwingungsbeanspruchungen des Bohrfutters bleibt das Futter aber auch in dieser dem Pfeil 15 entsprechenden Drehrichtung gesperrt. Die für dieses Sperrverhalten unterschiedliche Neigung der Flankenflächen 13', 13" wird auf einfache Weise durch eine sägezahnförmige Gestaltung erreicht, wobei die steilere Flankenfläche 13' der Zahnbrust und die flachere Flankenfläche 13" dem Zahnrücken entspricht. Das Sperrglied 12 kann zwischen seinen an den Sperrausnehmungen 10 ein- und ausgerückten Zuständen verstellt werden, wozu es durch eine Steuerkurve 35 an der Spannhülse 9 verstellbar und entsprechend die Spannhülse 9 relativ zum Spannring 8 verdrehbar ist. Diese Verdrehung der Spannhülse 9 relativ zum Spannring 8 ist in beiden Drehrichtungen (Pfeile 14, 15) formschlüssig begrenzt, wozu Anschläge 16', 16" vorgesehen sind. Durch Verdrehen der Spannhülse 9 in der dem Schließen des Bohrfutters entsprechenden Drehrichtung (Pfeil 15) verstellt sich das Sperrglied 12 aus dem ausgerückten Zustand in den eingerückten Zustand und umgekehrt, also durch Verdrehen der Spannhülse 9 in der dem Öffnen des Bohrfutters entsprechenden Drehrichtung (Pfeil 14) aus dem eingerückten Zustand in den ausgerückten Zustand. Zwischen der Spannhülse 9 und dem Spannring 8 ist eine allgemein mit 17 bezeichnete Rasteinrichtung vorgesehen, die in Umfangsrichtung zwei Raststellungen aufweist, wobei sich in der einen Raststellung das Sperrglied 12 in dem an den Sperrausnehmungen 10 eingerückten Zustand und in der anderen Raststellung im ausgerückten Zustand befindet, wie ein Vergleich der Figurenpaare 3.1, 3.2 bzw. 7.1, 7.2 bzw. 9.1, 9.2 oder 12.1, 12.2 erkennen läßt.

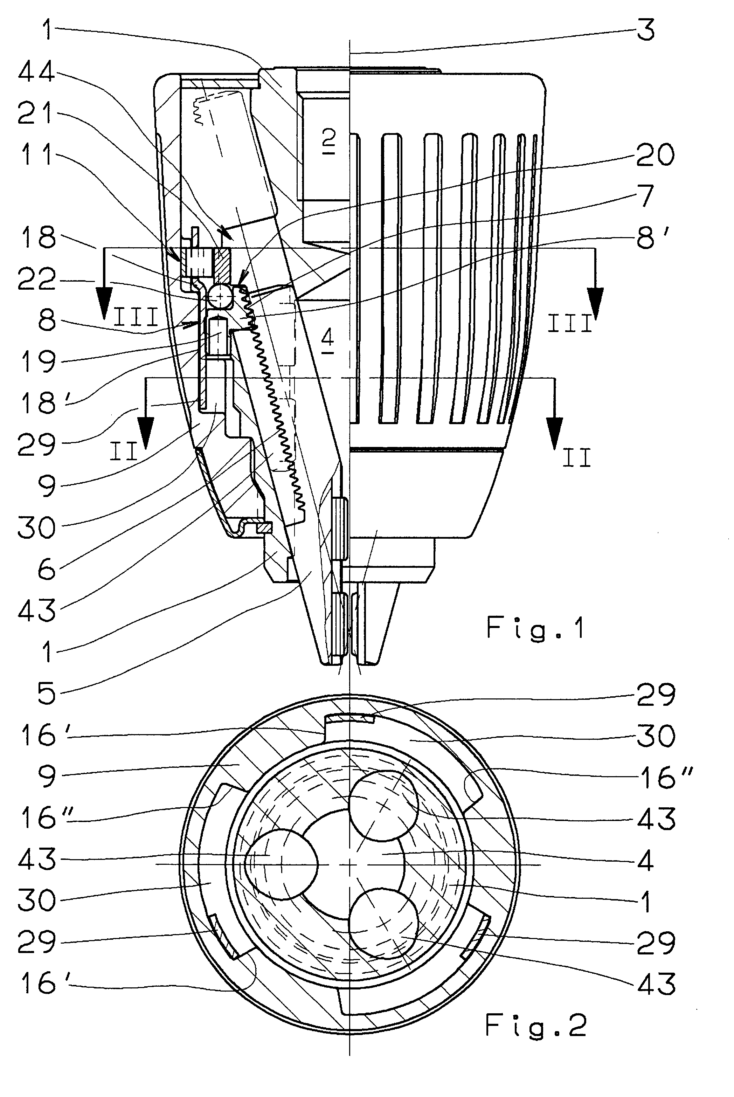

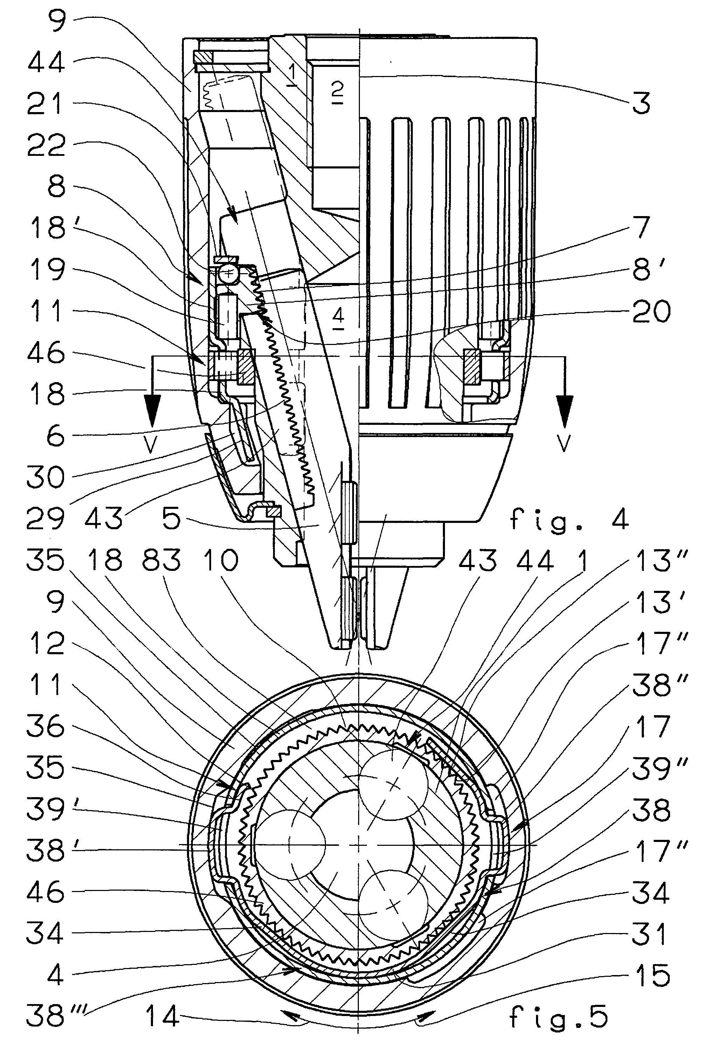

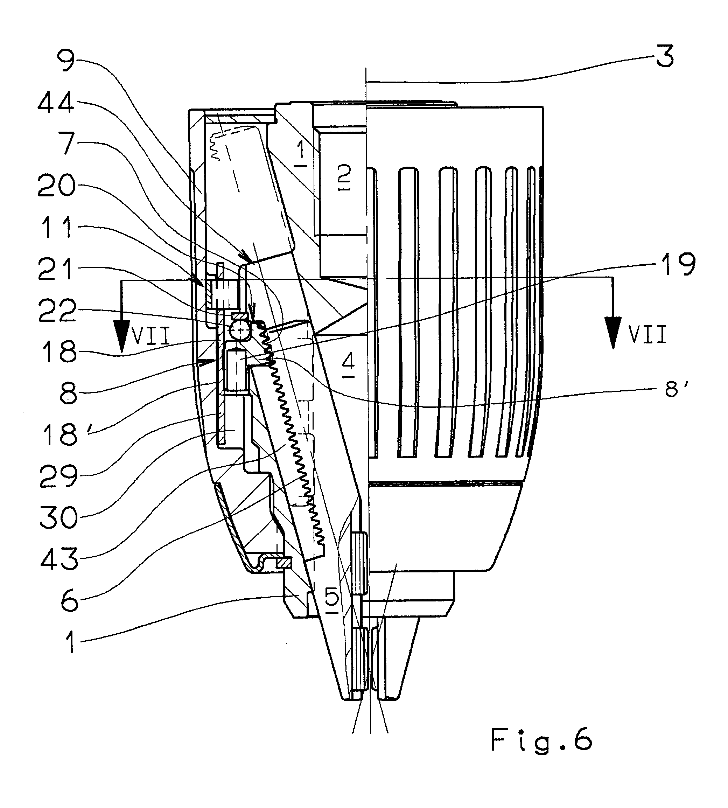

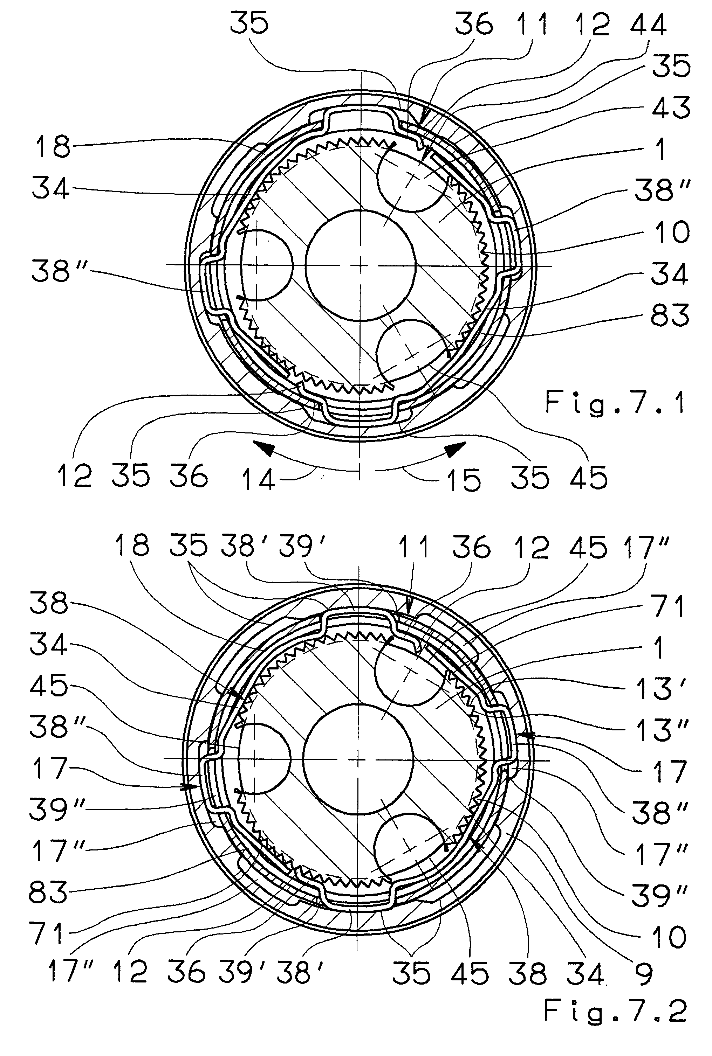

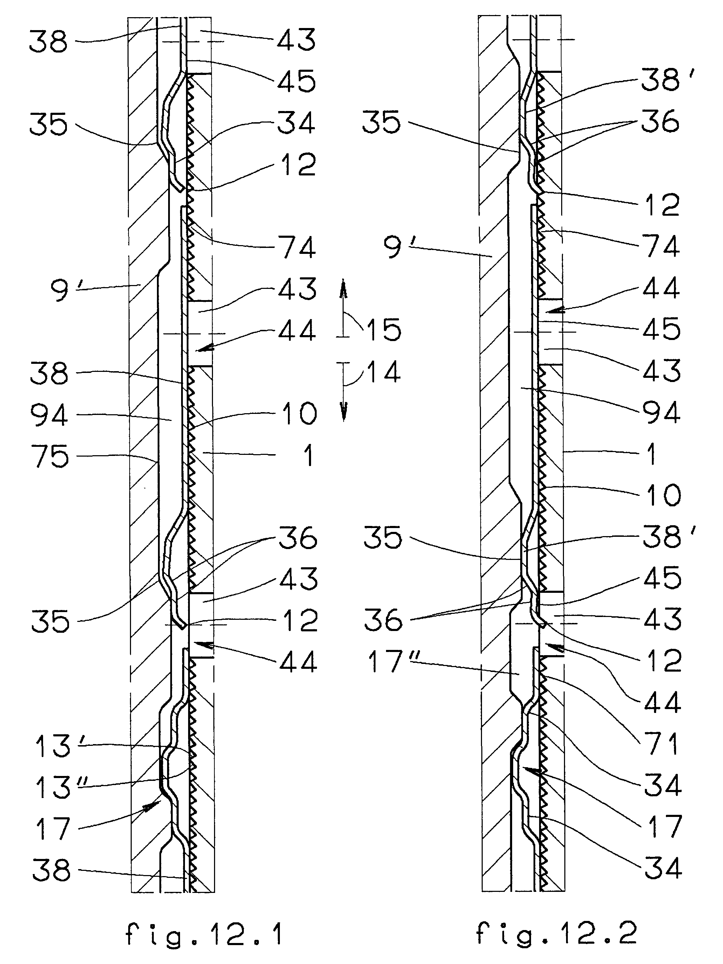

Der Kranz der Sperrausnehmungen 10 befindet sich in allen Fällen im Bereich der Mündungen 44 der Führungskanäle 43, und zwar in den Ausführungsbeispielen nach den Fig. 1 bis 5 an einem den Futterkörper 1 im Mündungsbereich der Führungskanäle 43 drehfest umschließenden und die Mündungen 44 überbrückenden Körperring 21, 46. Im Ausführungsbeispiel nach den Fig. 1 bis 3 ist dieser Körperring von dem am Futterkörper 1 unverdrehbar gehaltenen Lagerring 21 gebildet und entsprechend axial hinter dem Spanngewinde 7 des Spannrings 8 angeordnet. Im Ausführungsbeispiel nach den Fig. 4 und 5 ist der Körperring 46 zusätzlich zum Lagerring 21 vorgesehen und axial vor dem Spanngewinde 7 angeordnet. Da am Körperring 21, 46 der Kranz der Sperrausnehmungen 10 auch im Mündungsbereich der Führungskanäle 43 keine Unterbrechungen aufweist, genügt für die Sperreinrichtung 11 ein einziges Sperrglied 12, um in jeder Drehstellung des Spannrings 8 einen Sperreingriff des Sperrglieds 12 in einer der Sperrausnehmungen 10 zu ermöglichen. - In den Ausführungsformen nach den Fig. 6 bis 12 dagegen ist der Kranz der Sperrausnehmungen 10 unmittelbar am Futterkörper 1 ausgebildet, so daß die Mündungen 44 der Führungskanäle 43 im Kranz der Sperrausnehmungen 10 Unterbrechungen 45 erzeugen. Daher sind bei einem solchen Bohrfutter zwei jeweils durch eine eigene Steuerkurve 35 gesteuerte Sperrglieder 12 vorhanden, die in Umfangsrichtung des Bohrfutters längs des Kranzes der Sperrausnehmungen 10 so gegeneinander versetzt sind, daß immer eines der Sperrglieder 12 einer der Sperrausnehmungen 10 gegenübersteht, wenn sich das jeweils andere Sperrglied an einer der Unterbrechungen 45 befindet. Dies wird dadurch erreicht, daß der auf die Futterachse 3 bezogene Zentriwinkel zwischen den beiden Sperrgliedern 12 sich von dem entsprechenden Winkel zwischen den Führungskanälen 43 ausreichend unterscheidet. Somit ist auch hier für jede Drehstellung des Spannrings 8 der Sperreingriff wenigstens eines der Sperrglieder 12 in die Sperrausnehmungen 10 gewährleistet. Im einzelnen empfiehlt sich die in den Ausführungsbeispielen verwirklichte Anordnung des Kranzes der Sperrausnehmungen 10 unmittelbar am Futterkörper 1 axial hinter dem Spanngewinde 7, also in einem Bereich des Futterkörpers, in dem der Außendurchmesser des Futterkörpers 1 und damit des Kranzes der Sperrausnehmungen 10 groß und damit entsprechend groß auch das von der Sperreinrichtung 11 übertragbare Sperrmoment ist.

Der Spannring 8 besitzt einen eine Führung für die Spannhülse 9 bildenden koaxialen Zwischenring 18, der die spannringseitigen Teile der Anschläge 16', 16" für die Spannhülse 9, der Sperreinrichtung 11 (Sperrglied 12) und der Rasteinrichtung 17 trägt und ein Kragenteil 18' umfaßt, das den das Spanngewinde 7 tragenden Teil 8' des Spannrings 8 drehfest umschließt. Dabei besteht der das Spanngewinde 7 tragende Teil 8' des Spannrings 8 aus zwei umfangsmäßig geteilten, nämlich zunächst an jeder Teilung durch eine Bohrung 19 geschwächten und dann gebrochenen Ringhälften, die in einer Ringnut 20 des Futterkörpers 1 gegeneinander zusammengesetzt und durch das Kragenteil 18' am Futterkörper 1 zusammengehalten sind. Selbstverständlich kann aber der Spannring 8 auch einstückig ausgebildet sein, was jedoch in der Zeichnung nicht weiter dargestellt ist.

Für die Anschläge 16', 16" zur Drehbegrenzung zwischen der Spannhülse 9 und dem Spannring 8 sind allgemein mit 29 bezeichnete Anschlagstücke am einen Teil, also Spannring 8 oder Spannhülse 9, und eine das Anschlagstück 29 aufnehmende Aussparung 30 am jeweils anderen Teil vorgesehen, wobei das Anschlagstück 29 an den Enden des Drehwegs jeweils mit einer der die Aussparung 30 in Umfangsrichtung begrenzenden beiden Stirnflächen 16', 16" zum Anschlag kommt. In den Ausführungsbeispielen sind jeweils drei solcher gleichmäßig über den Futterumfang verteilt angeordneter Anschlagstücke 29, bzw. Aussparungen 30 vorhanden. Im einzelnen sind die Anschlagstücke 29 als Wandstücke des Zwischenrings 18 ausgebildet sein, die vom vorderen Rand des Zwischenrings 18 axial nach vorn in die auf der Wandinnenseite der Spannhülse 9 ausgebildeten Aussparungen 30 vorstehen.

Die Rasteinrichtung 17 ist von in den beiden Raststellungen miteinander zum Eingriff kommenden Rastelementen, nämlich einem Rastglied 38" und Rastaufnahmen 17" gebildet. Im einzelnen trägt der Spannring 8, bzw. sein Zwischenring 18 sich in Umfangsrichtung erstreckende Federstege 34, an dem sich der Rastvorsprung 38" befindet, während die Rastaufnahmen 17" auf der Wandinnenseite der Spannhülse 9 ausgebildet sind. Die Federstege 34 sind mit dem für den Rastvorgang jeweils erforderlichen Federweg ausgestattet.

Zur Steuerung jedes Sperrglieds 12 ist an der Spannhülse 9 eine jeweils eigene Steuerkurve 35 ausgebildet. Jedes Sperrglied 12 befindet sich dabei an einem eigenen, sich in Umfangsrichtung erstreckenden, vom Spannring 8 bzw. von seinem Zwischenring 18 getragenen Federarm 36. Im eingerückten Zustand des Sperrglieds 12 liegt der Federarm 36 der Steuerkurve 35 in einem solchen Abstand vom Sperrglied 12 an, daß der Federarm 36 an der Stelle des Sperrglieds 12 um dessen Eingriffstiefe in die Sperrausnehmungen 10 durchfedern kann, so daß beim Verdrehen der Spannhülse 9 gegenüber dem Futterkörper 1 in der dem Spannen des Futters entsprechenden Drehrichtung (Pfeil 15) das Sperrglied 12 über die Sperrausnehmungen 10 in der schon beschriebenen Weise hinwegrutschen kann.

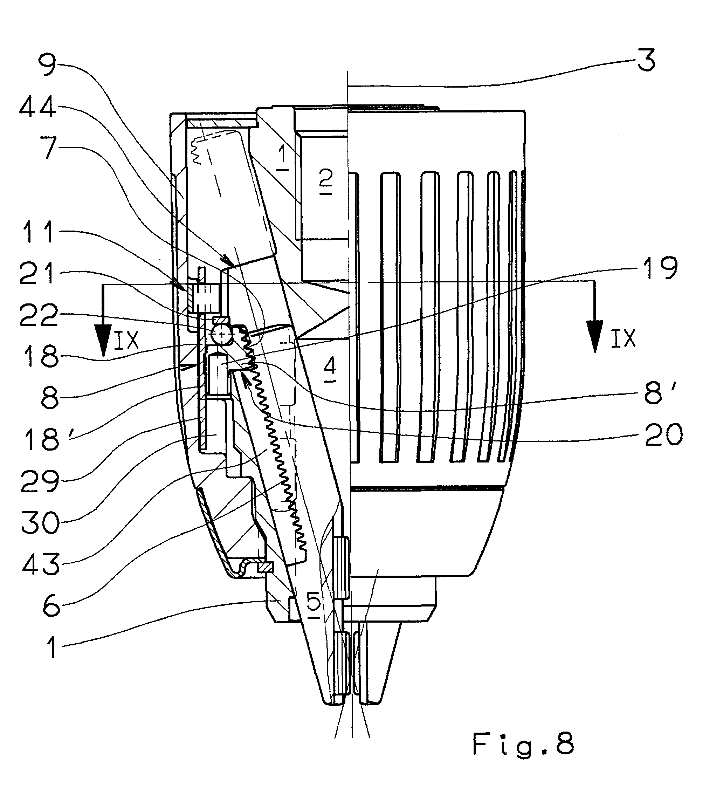

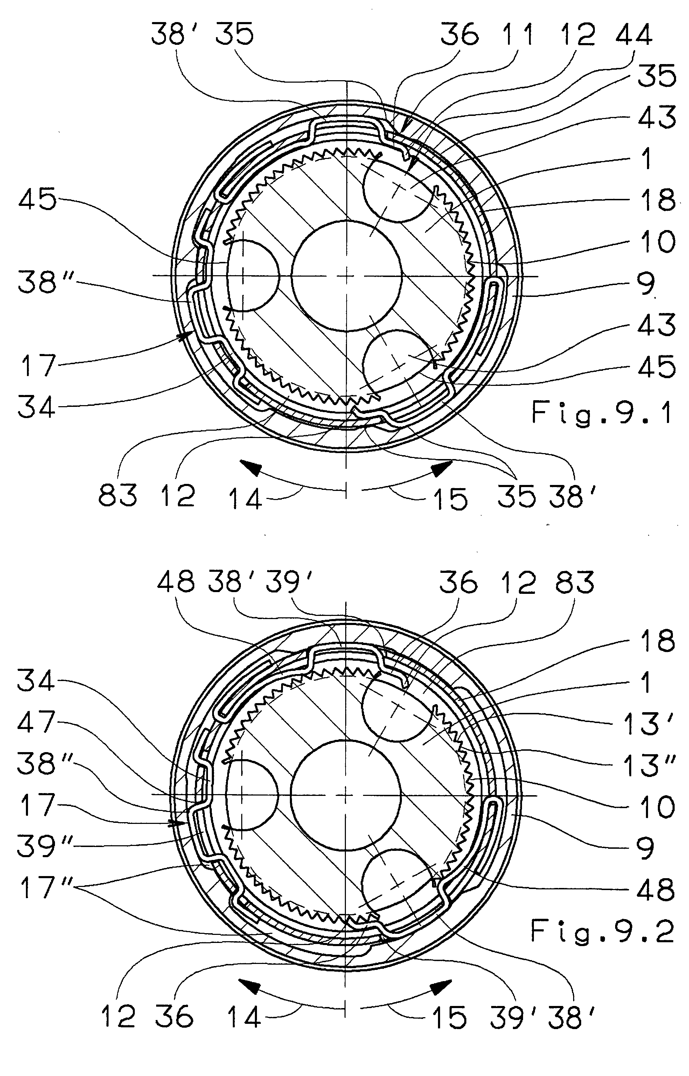

Die Federstege 34 und Federarme 36 können, wie in den Fig. 8 und 9, von voneinander unabhängigen Federbandstücken 47, 48 gebildet sein, wobei an das Federbandstück 47 das Rastglied 38" als Vorsprung angebogen ist. Die Federbandstücke 48 besitzen entsprechend gebildete Vorsprünge 38', welche die Anlage des Federarms 36 an der Steuerkurve 35 bilden. In allen anderen Ausführungsbeispielen bildet dagegen ein sich in Umfangsrichtung erstreckender und drehschlüssig mit dem Spannring 8, bzw. seinem Zwischenring 18 verbundener Federbügel 38 sowohl den Federarm 36 als auch die Federstege 34. Dazu sind am Federbügel 38 die zwei Vorsprünge 38', 38" in Umfangsrichtung in gegenseitigem Abstand angeordnet. Der sperrgliedseitige Vorsprung 38' bildet die Anlage des Federarms 36 an der Steuerkurve 35, der andere Vorsprung 38" das Rastglied der Rasteinrichtung 17. Der Federbügel 38 ist durch ein Federband und das Sperrglied 12 unmittelbar durch das rückwärtige Ende des Federbands gebildet, gesehen in der dem Schließen des Bohrfutters entsprechenden Drehrichtung des Spannrings 8 (Pfeil 15). Die Vorsprünge 38', 38" sind jeweils in Form von Auswölbungen an das Federband angebogen.

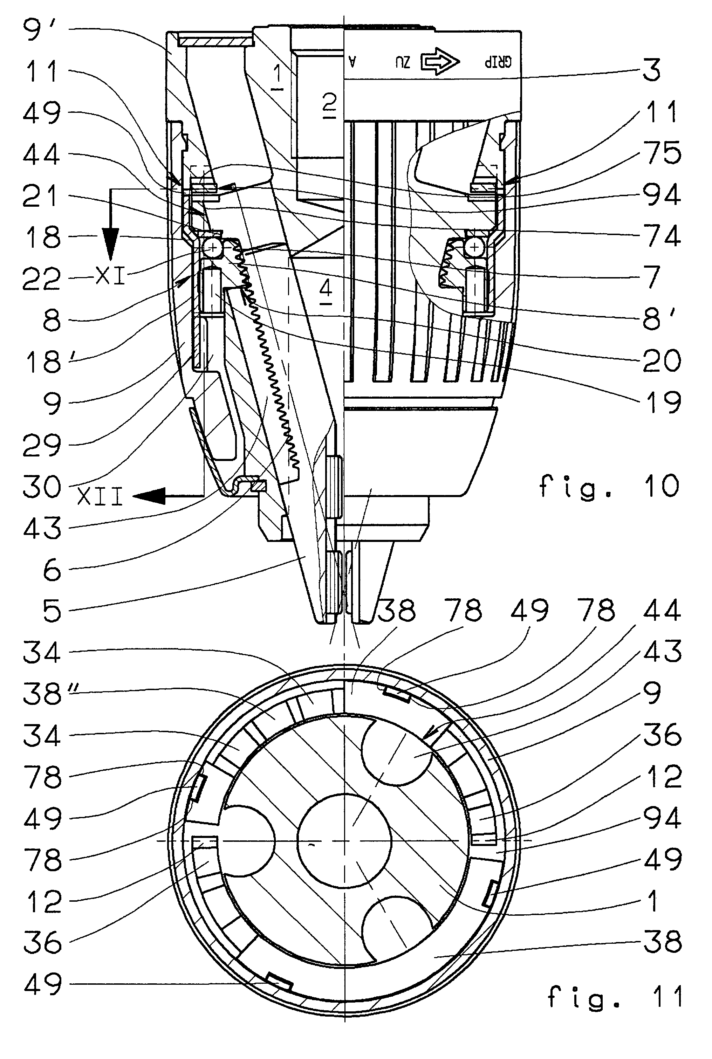

Im Ausführungsbeispiel nach den Fig. 10 bis 12 sind die Federbügel 38 in einem zwischen dem Futterkörper 1 und der Spannhülse 9 in Umfangsrichtung verlaufenden Schlitz 94 angeordnet und am Spannring 8 formschlüssig gegen Verdrehen in noch näher zu beschreibender Weise gesichert. Die Federbügel 38 liegen mit zur Futterachse 3 radialer Ausrichtung der Federbandfläche im Schlitz 94 und die Sperrausnehmungen 10 verlaufen entsprechend radial an einer futterkörperseitigen, zur Futterachse 3 senkrecht stehenden, allerdings von den Mündungen 44 unterbrochenen Ringfläche 74. Axial gegenüber dieser Ringfläche 74 liegt eine radiale Ringschulter 75 der Spannhülse 9 an, wobei die Ringschulter 75 an einem zur Spannhülse 9 gehörenden, axial unverschiebbar und verdrehungsfest mit der Spannhülse 9 verbundenen Hülsenteil 9' ausgebildet ist. Die Steuerkurven 35 sowie die Rastaufnahmen 17" sind an der Rinschulter 75 ausgebildet. Der Zwischenring 38 durchsetzt mit kurzen Zungen 49 die Federbügel 38 in Öffnungen, deren Ränder 78 in Umfangsrichtung den Zungen 49 anliegen, so daß sich die Federbeügel 38 nicht gegenüber dem Zwischenring 18 und damit dem Spannring 8 verdrehen können.

Bei den Ausführungsbeispielen nach den Fig. 1 bis 7 liegen die mit ihrer Federbandfläche parallel zur Futterachse 3 ausgerichteten Federbügel 38 in einem in Umfangsrichtung zwischen dem Futterkörper 1 und dem Zwischenring 18 verlaufenden Ringschlitz 83, der futterkörperseitig vom Kranz der axial verlaufenden Sperrausnehmungen 10 begrenzt ist. Der Federbügel 38 liegt mit auswärts gerichteter Vorspannung dem Zwischenring 18 an und durchgreift mit seinen beiden Vorsprüngen 38', 38" den Zwischenring 18 in Fenstern 39', 39" radial nach außen. Die diese Fenster 39', 39" durchgreifenden Vorsprünge 38', 38" sichern den Federbügel 38 durch Anschlag an den die Fenster in Umfangsrichtung begrenzenden Fensterrändern gegen Verdrehen relativ zum Zwischenring 18. Die radiale Breite des Ringschlitzes 83 ist größer als die entsprechende Dicke des Federbügels 38, der mit einem etwa mittig zwischen den beiden Vorsprüngen 38', 38" befindlichen Scheitelbereich 31 radial nach außen am Zwischenring 18 abgestützt ist und zwischen diesem Scheitelbereich 31 und den beiden Vorsprüngen 38', 38" je einen der Federstege 34 zur tangentialen Anlage am Kranz der Sperrausnehmungen 10 bildet. Durch die Vorspannung des Federbügels 38 wird das Sperrglied 12 außer Eingriff an den Sperrausnehmungen 10 gehalten; im Sperrzustand muß es über die Steuerkurve 35 in die Sperrausnehmungen 10 hineingedrückt werden. Jedenfalls beim Sperreingriff des Sperrglieds 12 in die Sperrausnehmungen 10 liegen beide Federstege 34 federnd am Kranz der Sperrausnehmungen 10 an, so daß sich der Federbügel 38 in seiner Lage im Ringschlitz 83 selbsttätig justiert. In diesem Sinne günstig erweist sich auch ein Federschenkel 71, den der Federbügel 38 mit seinem dem Vorsprung 38" abgewandten Ende bildet und der ebenfalls unter Vorspannung dem Kranz der Sperrausnehmungen 10 anliegt. Die dem Futterkörper 1 anliegenden beiden Federstege 34 und der Federschenkel 71 üben im übrigen eine Bremswirkung aus, durch die beim Bohrbetrieb auftretende Vibrationen an Futterkörper 1, Spannring 8 bzw. Zwischenring 18 und Stellring 9 gedämpft werden.

Die beiden Vorsprünge 38', 38" können sich, wie in den Fig. 1 bis 5, in Bezug auf die Futterachse 3 etwa diametral gegenüber liegen. Im Ausführungsbeispiel nach den Fig. 1 bis 3 besitzt der Federbügel 38 im Scheitelbereich zwischen seinen beiden Vorsprüngen 38', 38" einen dritten, den Zwischenring 18 in einem weiteren Fenster 39''' nach außen durchgreifenden Vorsprung 38'''. Dieser Vorsprung 38''' greift in eine auf der Wandinnenseite der Spannhülse 9 vorgesehene Nut 70, die sich in Umfangsrichtung mindestens über den maximal möglichen Verdrehungsweg der Spannhülse 9 gegenüber dem Spannring 8 erstreckt. Diese Nut 70 bildet mit ihren beiden Seitenwänden eine axiale Anlage für den Vorsprung 38''', wodurch die Spannhülse 9 gegen Axialverschiebungen am Spannring 8 gesichert werden kann. Eine vergleichbare axiale Führungsfunktion empfiehlt sich für die beiden Vorsprünge 38', 38" jedoch nicht, da hier die Anlage des Federbügels 38 an den Seitenwänden entsprechender Nuten die für den Sperrvorgang bzw. Rastvorgang erforderliche Beweglichkeit der beiden Vorsprünge 38', 38" beeinträchtigen könnte.

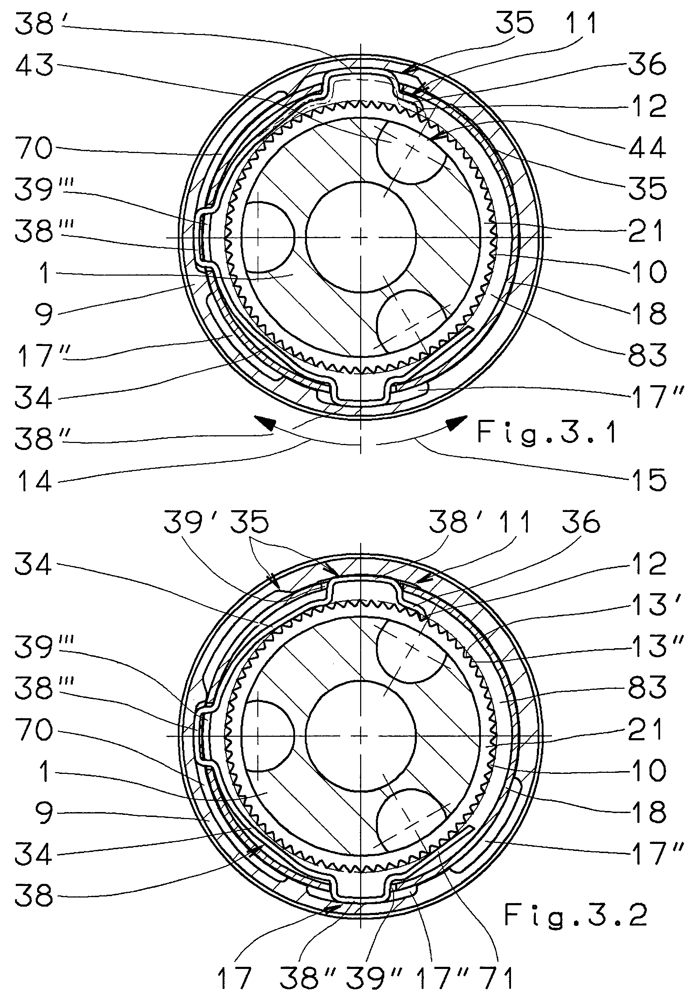

Im folgenden wird die Funktionsweise des erfindungsgemäßen Bohrfutters anhand des Ausführungsbeispiels nach den Fig. 1 bis 3.1, 3.2 kurz erläutert:

Die Fig. 1 bis 4.1 zeigen das Bohrfutter im ungesperrten Zustand. Der Federarm 36 ist radial nach außen verstellt, so daß das Sperrglied 12 außerhalb der Sperrausnehmungen 10 steht. Der in die Rastausnehmung 17" greifende Rastvorsprung 38" sichert den Zwischenring 18 und die Spannhülse 9 gegen Verdrehungen gegeneinander, so daß beim Drehen der Spannhülse 9 über den Zwischenring 18 der Spannring 8 relativ zum Futterkörper 1 frei verdreht werden kann, solange das Bohrfutter offen ist. Befindet sich in der Werkzeugaufnahme 4 des Bohrfutters ein Bohrerschaft und wird die Spannhülse 9 in Richtung des Pfeils 15, also im Sinne eines Schließens des Futters verdreht, erfolgt zunächst eine Mitnahme des Spannrings 8 in der schon beschriebenen Weise, bis die Spannbacken 5 am Werkzeugschaft zur Anlage kommen. Eine weitere Mitnahme des Spannrings 8 durch die Spannhülse 9 ist dann nicht mehr möglich, so daß sich die Spannhülse 9 unter Überwindung der Rasteinrichtung 17 in die in Fig. 4.2 gezeigte Stellung gegenüber dem Zwischenring 18 verstellt. In dieser Stellung drückt die Spannhülse 9 über die Steuerkurve 35 den Federarm 36 radial nach innen und damit das Sperrglied 12 in den eingerückten Zustand an den Sperrausnehmungen 10. Damit ist der Spannring 8 gegenüber dem Futterkörper 1 gegen ein Verdrehen in Richtung des Pfeils 14 und damit gegen ein unerwünschtes Öffnen des Bohrfutters gesichert. Jedoch kann das Bohrfutter weiter und fester gespannt, nämlich die Spannhülse 9 relativ zum Futterkörper 1 in Richtung des Pfeiles 15 verdreht werden, wobei nun die Spannhülse 9 über die Anschläge 16" den Zwischenring 18 und damit den Spannring 8 in Richtung des Pfeiles 15 festzieht. - Zum Lösen und Öffnen des gespannten Futters (Fig. 3.2) wird zunächst die Spannhülse 9 in Richtung des Pfeiles 14 verdreht, wobei zunächst wieder die Rasteinrichtung 17 verstellt wird und sich die Anschlagstücke 29 in den Aussparungen 30 wieder in den aus Fig. 3.2 ersichtlichen Zustand verstellen und gleichzeitig die Steuerkurve 35 den Federarm 36 freigibt, so daß sich der Federarm 36 aufgrund seiner Vorspannung radial nach außen verstellen kann, bis das Sperrglied 12 aus den Sperrausnehmungen 10 ausgetreten ist. Beim weiteren Drehen der Spannhülse 9 wird über die Anschläge 16' der Spannring 18 mitgenommen, wodurch das Bohrfutter gelöst und geöffnet wird. - Im Ergebnis ist zur Handhabung des erfindungsgemäßen Bohrfutters nur die drehende Betätigung der Spannhülse 9 gegenüber dem Futterkörper erforderlich, was nur eine Hand erfordert, wenn der Futterkörper 1 über die Bohrspindel gehalten oder umgekehrt die Spannhülse 9 von Hand festgehalten und der Futterkörper 1 durch die Bohrspindel gedreht wird. Die Spannhülse 9 kann sich daher axial über praktisch die ganze Länge des Bohrfutters bis zum axial hinteren Futterende erstrecken und dabei die einzige von außen der Hand zugängliche Futterhandhabe bilden. Nur wenn dennoch gewünscht wird, den Futterkörper 1 auch unabhängig von der Bohrspindel manipulieren zu können, empfiehlt es sich, noch einen Haltering für den Futterkörper 1 vorzusehen, der dann drehfest mit dem Futterkörper verbunden sein muß. Ein solcher Haltering 54 kann aber auch einstückig mit dem Futterkörper 1 ausgebildet sein.

## Patentansprüche

1. Bohrfutter, insbesondere zum Schlagbohren, mit einem an eine Bohrspindel anschließbaren Futterkörper (1), mit zwischen sich eine Aufnahme (4) für das Bohrwerkzeug bildenden Spannbacken (5), die in im Futterkörper (1) geneigt zur Futterachse (3) verlaufenden, mit ihrer rückwärtigen Mündung (44) die Umfangsfläche des Futterkörpers (1) anschneidenden Führungskanälen (43) verschiebbar sind und in der Mündung (44) der Führungskanäle (43) zum Öffnen und Schließen des Bohrfutters über eine Verzahnung (6) mit dem Spanngewinde (7) eines am Futterkörper drehbar und axial unverschiebbar geführten Spannrings (8) im Eingriff stehen, zu dessen Betätigung eine koaxiale, ebenfalls axial unverschiebbare Spannhülse (9) vorgesehen ist, ferner mit einer Sperreinrichtung (11) für den Spannring (8), bestehend aus einem koaxialen Kranz von Sperrausnehmungen (10) und aus mindestens einem Sperrglied (12), das unter Federkraft in die Sperrausnehmungen (10) eingerückt ist, wobei das Sperrglied (12) und die Sperrausnehmung (10) einander in derart geneigten Flankenflächen (13', 13") anliegen, daß diese den Spannring (8) in der dem Öffnen des Bohrfutters entsprechenden Drehrichtung gegen Verdrehen sperren, beim Verdrehen des Spannrings (8) in der entgegen gesetzten, also dem Schließen des Bohrfutters entsprechenden Drehrichtung aber das Sperrglied (12) gegen die Federkraft aus den Sperrausnehmungen (10) herausdrücken und dadurch von Sperrausnehmung zu Sperrausnehmung verrutschen lassen, und wobei das Sperrglied (12) zwischen dem an den Sperrausnehmungen (10) eingerückten Zustand und einem aus den Sperrausnehmungen (10) ausgerückten Zustand verstellbar ist, dadurch gekennzeichnet, daß die Spannhülse (9) relativ zum Spannring (8) verdrehbar ist und Anschläge (16', 16") vorgesehen sind, welche die Verdrehung der Spannhülse (9) relativ zum Spannring (8) in beiden Drehrichtungen begrenzen, daß der Kranz der Sperrausnehmungen (10) an einem den Futterkörper (1) im Mündungsbereich der Führungskanäle (43) drehfest umschließenden, die Mündungen (44) der Führungskanäle (43) überbrückenden Körperring (21, 46) angeordnet und das Sperrglied (12) am Spannring (8) vorgesehen ist, daß ferner zur Steuerung des Sperrglieds (12) an der Spannhülse (9) eine Steuerkurve (35) ausgebildet ist, so daß sich das Sperrglied (12) durch Verdrehen der Spannhülse (9) relativ zum Spannring (8) in der dem Schließen den Bohrfutters entsprechenden Drehrichtung aus dem ausgerückten Zustand in den eingerückten Zustand und umgekehrt verstellt, und daß zwischen der Spannhülse (9) und dem Spannring (8) eine Rasteinrichtung (17) vorhanden ist, die in Umfangsrichtung zwei Raststellungen aufweist, wobei sich in der einen Raststellung das Sperrglied (12) in derjenigen Stellung, die dem an den Sperrausnehmungen (10) eingerückten Zustand entspricht, und in der anderen Raststellung in der dem ausgerückten Zustand entsprechenden Stellung befindet.

2. Bohrfutter nach Anspruch 1, dadurch gekennzeichnet, daß der Körperring (46) als am Futterkörper (1) unverdrehbar gehaltener Lagerring (21) ausgebildet ist, gegen den der Spannring (8) auf der dem Bohrspindelanschluß zugewandten Seite axial abgestützt ist.

3. Bohrfutter, insbesondere zum Schlagbohren, mit einem an eine Bohrspindel anschließbaren Futterkörper (1), mit zwischen sich eine Aufnahme (4) für das Bohrwerkzeug bildenden Spannbacken (5), die in im Futterkörper (1) geneigt zur Futterachse (3) verlaufenden, mit ihrer rückwärtigen Mündung (44) die Umfangsfläche des Futterkörpers (1) anschneidenden Führungskanälen (43) verschiebbar sind und in der Mündung (44) der Führungskanäle (43) zum Öffnen und Schließen des Bohrfutters über eine Verzahnung (6) mit dem Spanngewinde (7) eines am Futterkörper drehbar und axial unverschiebbar geführten Spannrings (8) im Eingriff stehen, zu dessen Betätigung eine koaxiale, ebenfalls axial unverschiebbare Spannhülse (9) vorgesehen ist, ferner mit einer Sperreinrichtung (11) für den Spannring (8), bestehend aus einem koaxialen Kranz von Sperrausnehmungen (10) und aus mindestens einem Sperrglied (12), das unter Federkraft in die Sperrausnehmungen (10) eingerückt ist, wobei das Sperrglied (12) und die Sperrausnehmung (10) einander in derart geneigten Flankenflächen (13', 13") anliegen, daß diese den Spannring (8) in der dem Öffnen des Bohrfutters entsprechenden Drehrichtung gegen Verdrehen sperren, beim Verdrehen des Spannrings (8) in der entgegen gesetzten, also dem Schließen des Bohrfutters entsprechenden Drehrichtung aber das Sperrglied (12) gegen die Federkraft aus den Sperrausnehmungen (10) herausdrücken und dadurch von Sperrausnehmung zu Sperrausnehmung verrutschen lassen, und wobei das Sperrglied (12) zwischen dem an den Sperrausnehmungen (10) eingerückten Zustand und einem aus den Sperrausnehmungen (10) ausgerückten Zustand verstellbar ist, dadurch gekennzeichnet, daß die Spannhülse (9) relativ zum Spannring (8) verdrehbar ist und Anschläge (16', 16") vorgesehen sind, welche die Verdrehung der Spannhülse (9) relativ zum Spannring (8) in beiden Drehrichtungen begrenzen, daß der Kranz der Sperrausnehmungen (10) am Futterkörper (1) im Mündungsbereich der Führungskanäle (43) angeordnet ist und durch deren Mündungen (44) Unterbrechungen aufweist, daß das Sperrglied (12) am Spannring (8) in zweifacher Anordnung vorgesehen ist, wobei die beiden Sperrglieder (12), bezogen auf die Futterachse (3), in Umfangsrichtung um einen Winkel gegeneinander versetzt sind, der sich von dem entsprechenden Winkel zwischen den Führungskanälen (43) so unterscheidet, daß immer eines der Sperrglieder (12) den Sperrausnehmungen (10) gegenüber steht, wenn sich das jeweils andere Sperrglied an einer der Unterbrechungen (45) im Kranz der Sperrausnehmungen (10) befindet, daß ferner zur Steuerung der Sperrglieder (12) an der Spannhülse (9) je eine Steuerkurve (35) ausgebildet ist, so daß sich die Sperrglieder (12) durch Verdrehen der Spannhülse (9) relativ zum Spannring (8) in der dem Schließen des Bohrfutters entsprechenden Drehrichtung aus dem ausgerückten Zustand in den eingerückten Zustand und umgekehrt verstellen, und daß zwischen der Spannhülse (9) und dem Spannring (8) eine Rasteinrichtung (17) vorhanden ist, die in Umfangsrichtung zwei Raststellungen aufweist, wobei sich in der einen Raststellung die Sperrglieder (12) in derjenigen Stellung, die dem an den Sperrausnehmungen (10) eingerückten Zustand entspricht, und in der anderen Raststellung in der dem ausgerückten Zustand entsprechenden Stellung befinden.

4. Bohrfutter nach einem der Ansprüche 1 bis 3, dadurch gekennzeichnet, daß der Spannring (8) einen eine Führung für die Spannhülse (9) bildenden koaxialen Zwischenring (18) aufweist, der die spannringseitigen Teile der Anschläge (16', 16") für die Spannhülse (9), der Sperreinrichtung (10, 12) und der Rasteinrichtung (17) trägt und ein Kragenteil (18') umfaßt, das den das Spanngewinde (7) tragenden Teil des Spannrings (8) drehfest umschließt.

5. Bohrfutter nach Anspruch 4, dadurch gekennzeichnet, daß der das Spanngewinde (7) tragende Teil des Spannrings (8) aus zwei Ringhälften besteht, die durch das Kragenteil (18') am Futterkörper zusammengehalten sind.

6. Bohrfutter nach einem der Ansprüche 1 bis 5, dadurch gekennzeichnet, daß für die Anschläge (16', 16") zwischen der Spannhülse (9) und dem Spannring (8) mindestens ein Anschlagstück (29) am einen Teil, d. h. Spannring (8) oder Spannhülse (9), und eine das Anschlagstück (29) aufnehmende Aussparung (30) am anderen Teil vorgesehen sind, wobei das Anschlagstück (29) an den Enden des Drehwegs jeweils mit einer der die Aussparung (30) in Umfangsrichtung begrenzenden beiden Stirnflächen zum Anschlag kommt.

7. Bohrfutter nach Anspruch 6, dadurch gekennzeichnet, daß bei einem Spannring (8) mit Zwischenring (18) das Anschlagstück (29) als Wandstück des Zwischenrings (18) ausgebildet ist, das vom Rand des Zwischenrings axial in die auf der Wandinnenseite der Spannhülse (9) ausgebildete Aussparung (30) vorsteht.

8. Bohrfutter nach einem der Ansprüche 1 bis 7, dadurch gekennzeichnet, daß die Rasteinrichtung (17) von in den Raststellungen miteinander zum Eingriff kommenden Rastelementen, d. h. Rastglied (38") oder Rastaufnahme (17"), am Spannring (8) und an der Spannhülse (9) gebildet ist, und daß der Spannring (8) mindestens einen sich in Umfangsrichtung erstreckenden Federsteg (34) trägt, an dem sich mindestens eines der Rastelemente befindet.

9. Bohrfutter nach Anspruch 7, dadurch gekennzeichnet, daß das Sperrglied (12) an einem sich in Umfangsrichtung erstreckenden Federarm (36) des Spannrings (8) ausgebildet ist, wobei der Federarm (36) im eingerückten Zustand des Sperrglieds (12) der Steuerkurve (35) in einem Abstand vom Sperrglied (12) anliegt, der das Durchfedern des Federarms (36) an der Stelle des Sperrglieds (12) um dessen Eingriffstiefe in die Sperrausnehmungen (10) ermöglicht.

10. Bohrfutter nach den Ansprüchen 8 und 9, dadurch gekennzeichnet, daß der Federsteg (34) und der Federarm (36) von einem sich in Umfangsrichtung erstreckenden, drehschlüssig mit dem Spannring (8) verbundenen Federbügel (38) gebildet sind, an dem zwei in Umfangsrichtung in gegenseitigem Abstand befindliche Vorsprünge (38', 38") vorgesehen sind, von denen der sperrgliedseitige Vorsprung (38') die Anlage des Federarms (36) an der Steuerkurve (35), der andere Vorsprung (38") das Rastglied der Rasteinrichtung (17) bildet, deren Rastaufnahmen (17") an der Spannhülse (9) ausgebildet sind.

11. Bohrfutter nach Anspruch 10, dadurch gekennzeichnet, daß der Federbügel (38) durch ein Federband und das Sperrglied (12) unmittelbar durch das rückwärtige Ende des Federbands gebildet ist, gesehen in der dem Schließen des Bohrfutters entsprechenden Drehrichtung des Spannrings (8).

12. Bohrfutter nach Anspruch 11, dadurch gekennzeichnet, daß die Vorsprünge (38', 38") als Auswölbungen an das Federband angebogen sind.

13. Bohrfutter nach Anspruch 11 oder 12, dadurch gekennzeichnet, daß der Federbügel (38) in einem zwischen dem Futterkörper (1) und der Spannhülse (9) in Umfangsrichtung verlaufenden Schlitz (94) angeordnet und am Spannring (8) formschlüssig gegen Verdrehen gesichert ist.

14. Bohrfutter nach Anspruch 13, dadurch gekennzeichnet, daß der Federbügel (38) mit zur Futterachse (3) radialer Ausrichtung der Federbandfläche im Schlitz (94) liegt und die Sperrausnehmungen (10) radial an einer futterkörperseitigen, zur Futterachse (3) senkrechten Ringfläche (74) verlaufen.

15. Bohrfutter nach Anspruch 14, dadurch gekennzeichnet, daß bei einem Spannring (8) mit Zwischenring (18) dieser mit Zungen (49) den Federbügel (38) axial in Öffnungen durchsetzt, deren Ränder (78) in Umfangsrichtung den Zungen (49) anliegen.

16. Bohrfutter nach Anspruch 11 oder 12, dadurch gekennzeichnet, daß bei einem Spannring (8) mit Zwischenring (18) der mit seiner Federbandfläche parallel zur Futterachse (3) ausgerichtete Federbügel (38) in einem in Umfangsrichtung zwischen dem Futterkörper (1) und dem Zwischenring (18) verlaufenden Ringschlitz (83) liegt, der futterkörperseitig vom Kranz der axial verlaufenden Sperrausnehmungen (10) begrenzt ist, und daß der Federbügel (38) mit auswärts gerichteter Vorspannung den Zwischenring (18) anliegt und mit seinen beiden Vorsprüngen (38', 38") den Zwischenring (18) in Fenstern (39', 39") auswärts durchgreift, in denen der Federbügel (38) gegen Verdrehen festgehalten ist.

17. Bohrfutter nach Anspruch 16, dadurch gekennzeichnet, daß der Ringschlitz (83) radial breiter als der Federbügel (38) dick ist, daß der Federbügel (38) mit einem etwa mittig zwischen den beiden Vorsprüngen (38', 38") befindlichen Scheitelbereich (31) radial auswärts am Zwischenring (18) abgestützt ist und zwischen diesem Scheitelbereich (31) und den beiden Vorsprüngen (38', 38") je einen Federsteg (34) zur tangentialen Anlage am Kranz der Sperrausnehmungen (10) bildet.

18. Bohrfutter nach Anspruch 17, dadurch gekennzeichnet, daß der das Rastglied bildende Vorsprung (38") an seiner dem Scheitelbereich (31) des Federbügels (38) abgewandten Seite einen dem Kranz der Sperrausnehmungen (10) unter Vorspannung tangential anliegenden Federschenkel (71) trägt.

19. Bohrfutter nach einem der Ansprüche 16 bis 18, dadurch gekennzeichnet, daß der Federbügel (38) im Scheitelbereich (31) zwischen seinen beiden Vorsprüngen (38', 38") einen dritten, den Zwischenring (18) in einem weiteren Fenster (39''') nach außen durchgreifenden Vorsprung (38''') aufweist, der in eine auf der Wandinnenseite der Spannhülse (9) vorgesehene Nut (70) greift, die sich in Umfangsrichtung mindestens über den maximal möglichen Verdrehungsweg der Spannhülse (9) gegenüber dem Spannring (8) erstreckt und mit mindestens einer ihrer Seitenwände eine axiale Anlage für den Vorsprung (38''') bildet, wodurch die Spannhülse (9) gegen Axialverschiebung am Spannring (8) gesichert ist.

## Claims

1. A drilling chuck, in particular for hammer drilling, having a chuck body (1) which can be connected to a drilling spindle, clamping jaws (5) which form between them a receiving means (4) for the drilling tool and which are displaceable in guide passages (43) extending in the chuck body (1) inclinedly with respect to the chuck axis (3) and intersecting with their rearward mouth opening (44) the peripheral surface of the chuck body (1) and which are in engagement in the mouth opening (44) of the guide passages (43) for opening and closing the drilling chuck by way of a tooth arrangement (6) with the clamping screwthread (7) of a clamping ring (8) which is guided rotatably and axially immovably on the chuck body, for the actuation of which there is provided a coaxial clamping sleeve (9) which is also axially immovable, further having a locking device (11) for the clamping ring (8), comprising a coaxial ring of locking openings (10) and at least one locking member (12) which is engaged into the locking openings (10) under spring force, wherein the locking member (12) and the locking opening (10) bear against each other at flank surfaces (13', 13") which are inclined in such a way that they lock the clamping ring (8) to prevent rotation in the direction of rotation corresponding to opening of the drilling chuck, but upon rotation of the locking ring (8) in the opposite direction of rotation corresponding therefore to closing of the drilling chuck they urge the locking member (12) against the spring force out of the locking openings (10) and thereby allow it to slip from one locking opening to another locking opening, and wherein the locking member (12) is displaceable between the condition of being engaged at the locking openings (10) and a condition of being disengaged from the locking openings (10), characterised in that the clamping sleeve (9) is rotatable relative to the clamping ring (8) and there are provided abutments (16', 16") which delimit the rotary movement of the clamping sleeve (9) relative to the clamping ring (8) in both directions of rotation, that the ring of the locking openings (10) is arranged on a body ring (21, 46) which non-rotatably surrounds the chuck body (1) in the region of the mouth openings of the guide passages (43) and which bridges over the mouth openings (44) of the guide passages (43) and the locking member (12) is provided on the clamping ring (8), that in addition a control cam (35) is provided for control of the locking member (12) on the clamping sleeve (9) so that the locking member (12) is displaced by rotation of the clamping sleeve (9) relative to the clamping ring (8) in the direction of rotation corresponding to closing of the drilling chuck from the disengaged condition into the engaged condition and vice-versa and that provided between the clamping sleeve (9) and the clamping ring (8) is a detent device (17) which has two detent positions in the peripheral direction, wherein in the one detent position the locking member (12) is in that position which corresponds to the condition of being engaged at the locking openings (10) and in the other detent position it is in the position corresponding to the disengaged condition.

2. A drilling chuck according to claim 1 characterised in that the body ring (46) is in the form of a mounting ring (21) which is held non-rotatably on the chuck body (1) and against which the clamping ring (8) is axially supported on the side which is towards the drilling spindle connection.

3. A drilling chuck, in particular for hammer drilling, having a chuck body (1) which can be connected to a drilling spindle, clamping jaws (5) which form between them a receiving means (4) for the drilling tool and which are displaceable in guide passages (43) extending in the chuck body (1) inclinedly with respect to the chuck axis (3) and intersecting with their rearward mouth opening (44) the peripheral surface of the chuck body (1) and which are in engagement in the mouth opening (44) of the guide passages (43) for opening and closing the drilling chuck by way of a tooth arrangement (6) with the clamping screwthread (7) of a clamping ring (8) which is guided rotatably and axially immovably on the chuck body, for the actuation of which there is provided a coaxial clamping sleeve (9) which is also axially immovable, further comprising a locking device (11) for the clamping ring (8), comprising a coaxial ring of locking openings (10) and at least one locking member (12) which is engaged into the locking openings (10) under spring force, wherein the locking member (12) and the locking opening (10) bear against each other at flank surfaces (13', 13") which are inclined in such a way that they lock the clamping ring (8) to prevent rotation in the direction of rotation corresponding to opening of the drilling chuck, but upon rotation of the locking ring (8) in the opposite direction of rotation corresponding therefore to closing of the drilling chuck they urge the locking member (12) against the spring force out of the locking openings (10) and thereby allow it to slip from one locking opening to another locking opening, and wherein the locking member (12) is displaceable between the condition of being engaged at the locking openings (10) and a condition of being disengaged from the locking openings (10), characterised in that the clamping sleeve (9) is rotatable relative to the clamping ring (8) and there are provided abutments (16', 16") which delimit the rotary movement of the clamping sleeve (9) relative to the clamping ring (8) in both directions of rotation, that the ring of the locking openings (10) is arranged on the chuck body in the region of the mouth openings of the guide passages (43) and has interruptions through the mouth openings (44) of the guide passages, that the locking member (12) is provided on the clamping ring (8) in duplicate, wherein the two locking members (12), in relation to the chuck axis (3), are displaced relative to each other in the peripheral direction through an angle which differs from the corresponding angle between the guide passages (43) in such a way that one of the locking members (12) is always opposite the locking openings (10) when the respective other locking member is at one of the interruptions in the ring of the locking openings, that in addition a respective control cam (35) is provided for control of the locking members (12) on the clamping sleeve (9) so that the locking members (12) are displaced by rotation of the clamping sleeve (9) relative to the clamping ring (8) in the direction of rotation corresponding to closing of the drilling chuck from the disengaged condition into the engaged condition and vice-versa and that provided between the clamping sleeve (9) and the clamping ring (8) is a detent device (17) which has two detent positions in the peripheral direction, wherein in the one detent position the locking members (12) are in that position which corresponds to the condition of being engaged at the locking openings (10) and in the other detent position they are in the position corresponding to the disengaged condition.

4. A drilling chuck according to one of claims 1 to 3 characterised in that the clamping ring (8) has a coaxial intermediate ring (18) which forms a guide for the clamping sleeve (9) and which carries the parts, at the clamping ring side, of the abutments (16', 16") for the clamping sleeve (9), the locking device (10, 12) and the detent device (17), and includes a collar portion (18') which non-rotatably surrounds the part of the clamping ring (8), which carries the clamping screwthread (7).

5. A drilling chuck according to claim 4 characterised in that the part of the clamping ring (8), which carries the clamping screwthread (7), comprises two ring halves which are held together by the collar portion (18') on the chuck body.

6. A drilling chuck according to one of claims 1 to 5 characterised in that provided for the abutments (16', 16") between the clamping sleeve (9) and the clamping ring (8) is at least one abutment portion (29) on the one part, that is to say the clamping ring (8) or the clamping sleeve (9), and an opening (30) for receiving the abutment portion (29) on the other part, wherein the abutment portion (29) at the ends of the rotational travel comes respectively into abutment with one of the two end faces delimiting the opening (30) in the peripheral direction.

7. A drilling chuck according to claim 6 characterised in that in the case of a clamping ring (8) with an intermediate ring (18) the abutment portion (29) is in the form of a wall portion of the intermediate ring (18) which projects from the edge of the intermediate ring axially into the opening (30) on the inside of the wall of the clamping sleeve (9).

8. A drilling chuck according to one of claims 1 to 7 characterised in that the detent device (17) is formed by detent elements which come into engagement with each other in the detent positions, that is to say the detent member (38") or the detent receiving means (17"), on the clamping ring (8) and on the clamping sleeve (9), and that the clamping ring (8) carries at least one spring leg (34) which extends in the peripheral direction and on which is disposed at least one of the detent elements.

9. A drilling chuck according to claim 7 characterised in that the locking member (12) is provided on a spring arm (38) of the clamping ring (8), the spring arm extending in the peripheral direction, wherein the spring arm (36) in the engaged condition of the locking member (12) bears against the control cam (35) at a spacing from the locking member (12) which permits resilient movement of the spring arm (36) at the location of the locking member (12) by the depth of engagement thereof into the locking openings (10).

10. A drilling chuck according to claims 8 and 9 characterised in that the spring leg (34) and the spring arm (36) are formed by a spring loop (38) which extends in the peripheral direction and which is non-rotatably connected to the clamping ring (8) and on which are provided two projections (38', 38") which are disposed at a mutual spacing in the peripheral direction and of which the projection (38') at the locking member side forms the contact of the spring arm (36) against the control cam (35) and the other projection (38") forms the detent member of the detent device (17) whose detent receiving means (17") are provided on the clamping sleeve (9).

11. A drilling chuck according to claim 10 characterised in that the spring loop (38) is formed by a spring band and the locking member (12) is formed directly by the rearward end of the spring band, viewed in the direction of rotation of the clamping ring (8) corresponding to closing of the drilling chuck.

12. A drilling chuck according to claim 11 characterised in that the projections (38', 38") are bent on the spring band in the form of outwardly curved portions.

13. A drilling chuck according to claim 11 or claim 12 characterised in that the spring loop (38) is arranged in a slot (94) extending in the peripheral direction between the chuck body (1) and the clamping sleeve (9) and is secured in positively locking relationship to prevent rotational movement on the clamping ring (8).

14. A drilling chuck according to claim 13 characterised in that the spring loop (38) is disposed in the slot (94) with the surface of the spring band in a radial orientation with respect to the chuck axis (3) and the locking openings (10) extend radially on an annular surface (74) which is at the chuck body side and which is perpendicular to the chuck axis (3).

15. A drilling chuck according to claim 14 characterised in that in the case of a clamping ring (8) with an intermediate ring (18) it passes with tongues (49) axially through the spring loop (38) in openings whose edges (78) bear against the tongues (49) in the peripheral direction.

16. A drilling chuck according to claim 11 or claim 12 characterised in that in the case of a clamping ring (8) with an intermediate ring (18) the spring loop (38) which is oriented with its spring band surface in parallel relationship with the chuck axis (3) is disposed in an annular slot (83) which extends in the peripheral direction between the chuck body (1) and the intermediate ring (18) and which is delimited at the chuck body side by the ring of axially extending locking openings (10), and that the spring loop (38) bears with an outwardly directed bias against the intermediate ring (18) and engages outwardly with its two projections (38', 38") through the intermediate ring (18) in windows (39', 39") in which the spring loop (38) is retained to prevent rotation thereof.

17. A drilling chuck according to claim 16 characterised in that annular slot (83) is radially wider than the spring loop (38) is thick, that the spring loop (38) is radially outwardly supported on the intermediate ring (18) with an apex region (31) disposed approximately centrally between the two projections (38', 38") and forms between said apex region (31) and the two projections (38', 38") a respective spring leg (34) for tangentially bearing against the ring of the locking openings (10).

18. A drilling chuck according to claim 17 characterised in that the projection (38") forming the detent member carries at its side remote from the apex region (31) of the spring loop (38) a spring limb (71) which tangentially bears under a bias against the ring of the locking openings (10).

19. A drilling chuck according to one of claims 16 to 18 characterised in that in the apex region (31) between its two projections (38', 38") the spring loop (38) has a third projection (38"') which engages outwardly through the intermediate ring (18) in a further window (39"') and which engages into a groove (70) which is provided on the inside of the wall of the clamping sleeve (9) and which extends in the peripheral direction at least over the maximum possible rotational travel of the clamping sleeve (9) with respect to the clamping ring (8) and with at least one of its side walls forms an axial support for the projection (38"') whereby the clamping sleeve (9) is secured against axial displacement on the clamping ring (8).

## Revendications

1. Mandrin porte-foret, en particulier pour le perçage à percussion, avec un corps de mandrin (1) qui peut être fixé à une broche de perçage, avec des mors de serrage (5) qui définissent entre eux un logement (4) pour l'insertion de l'outil de perçage, peuvent coulisser dans des canaux de guidage (43) inclinés par rapport à l'axe de mandrin (3) dont l'ouverture arrière (44) est sécante avec la surface périphérique du corps de mandrin (1) et qui, dans l'ouverture (44) des canaux de guidage (43), engrènent avec une denture (6) avec le filetage de serrage (7) d'une bague de serrage (8) montée tournante, mais fixe dans la direction axiale, sur le corps de mandrin (1), pour l'actionnement de laquelle il est prévu un manchon de serrage (9), coaxial, également fixe dans la direction axiale, avec en outre un dispositif de verrouillage (11) de la bague de serrage (8), formé d'une couronne coaxiale d'évidements de verrouillage (10) et d'au moins un organe de verrouillage (12) qui est repoussé dans les évidements de verrouillage (10) par une force élastique, l'organe de verrouillage (12) et l'évidement de verrouillage (10) étant en contact réciproque par des surfaces de flanc (13', 13") qui sont inclinées de manière à ce qu'elles bloquent la bague de serrage (8) dans le sens de rotation correspondant à l'ouverture du mandrin, mais lors de la rotation de la bague de serrage (8) dans le sens opposé, c'est-à-dire dans le sens de rotation correspondant à la fermeture du mandrin, repoussent l'organe de verrouillage (12) hors des évidements de verrouillage (10), à l'encontre de la force élastique et le font ainsi glisser d'un évidement de verrouillage à l'autre, l'organe de verrouillage (12) pouvant être déplacé entre l'état en prise dans les évidements de verrouillage (10) et un état hors de prise d'avec les évidements de verrouillage (10), caractérisé en ce que le manchon de serrage (9) peut tourner par rapport à la bague de serrage (8), en ce qu'il est prévu des butées (16', 16") qui limitent la rotation du manchon de serrage (9) par rapport à la bague de serrage (8) dans les deux sens de rotation, en ce que la couronne des évidements de verrouillage (10) est disposée dans une bague de corps (21, 46) qui entoure le corps de mandrin (1) en étant solidaire de celui-ci en rotation, dans la région des ouvertures (44) des canaux de guidage (43) et qui enjambe lesdites ouvertures (44) desdits canaux de guidage (43), en ce qu'en outre pour commander l'organe de verrouillage (12), une came de commande (35) est aménagée sur le manchon de serrage (9), de telle sorte que l'organe de verrouillage (12) puisse être amené par rotation du manchon de serrage (9) par rapport à la bague de serrage (8) dans le sens de rotation correspondant à la fermeture du mandrin, de la position non-encliquetée dans la position encliquetée et inversement, et en ce qu'il est prévu entre le manchon de serrage (9) et la bague de serrage (8), un dispositif d'encliquetage (17) qui présente deux positions d'encliquetage dans la direction périphérique, l'organe de verrouillage (12), dans l'une des position d'encliquetage, se trouvant dans la position qui correspond à l'état en prise dans les évidements de verrouillage (10) et dans l'autre position d'encliquetage, se trouvant dans la position qui correspond à l'état hors de prise.

2. Mandrin de perçage selon la revendication 1, caractérisé en ce que, la bague de corps (46) est réalisée sous la forme d'une bague de palier (21) montée fixe en rotation sur le corps de mandrin (1), sur laquelle la bague de serrage (8) vient en appui axial, côté liaison avec la broche de perçage.

3. Mandrin porte-foret, en particulier pour le perçage à percussion, avec un corps de mandrin (1) qui peut être fixé à une broche de perçage, avec des mors de serrage (5) qui définissent entre eux un logement (4) pour l'insertion de l'outil de perçage, peuvent coulisser dans des canaux de guidage (43) inclinés par rapport à l'axe de mandrin (3) dont l'ouverture arrière (44) est sécante avec la surface périphérique du corps de mandrin (1) et qui, dans l'ouverture (44) des canaux de guidage (43), engrènent avec une denture (6) avec le filetage de serrage (7) d'une bague de serrage (8) montée tournante, mais fixe dans la direction axiale, sur le corps de mandrin (1), pour l'actionnement de laquelle il est prévu un manchon de serrage (9), coaxial, également fixe dans la direction axiale, avec en outre un dispositif de verrouillage (11) de la bague de serrage (8), formé d'une couronne coaxiale d'évidements de verrouillage (10) et d'au moins un organe de verrouillage (12) qui est repoussé dans les évidements de verrouillage (10) par une force élastique, l'organe de verrouillage (12) et l'évidement de verrouillage (10) étant en contact réciproque par des surfaces de flanc (13', 13") qui sont inclinées de manière à ce qu'elles bloquent la bague de serrage (8 dans le sens de rotation correspondant à l'ouverture du mandrin, lors de la rotation de la bague de serrage (8) dans le sens opposé, c'est-à-dire dans le sens de rotation correspondant à la fermeture du mandrin, repoussent l'organe de verrouillage (12) hors des évidements de verrouillage (10), à l'encontre de la force élastique et le font ainsi glisser d'un évidement de verrouillage à l'autre et l'organe de verrouillage (12) pouvant être déplacé entre l'état en prise dans les évidements de verrouillage (10) et un état hors de prise d'avec les évidements de verrouillage (10), caractérisé en ce que le manchon de serrage (9) peut tourner par rapport à la bague de serrage (8), en ce qu'il est prévu des butées (16', 16") qui limitent la rotation du manchon de serrage (9) par rapport à la bague de serrage (8) dans les deux sens de rotation, en ce que la couronne des évidements de verrouillage (10) est disposée sur le corps de mandrin (1), dans la région des ouvertures (44) des canaux de guidage (43) et présente discontinuités dues à l'ouverture (44) des canaux, en ce que l'organe de verrouillage (12) sur la bague de serrage (8) est prévu en double, les deux organes de verrouillage (12), rapporté à l'axe de mandrin (3), étant mutuellement décalés d'un angle qui diffère de l'angle entre les canaux de guidage (43), de telle sorte que l'un des organes de verrouillage (12) soit toujours en regard d'évidements de verrouillage (10) lorsque l'autre organe de verrouillage est en regard de l'une des discontinuités (45) dans la couronne d'évidements de verrouillage (10), en ce qu'en outre pour commander l'organe de verrouillage (12), une came de commande (35) est aménagée sur le manchon de serrage (9), de telle sorte que l'organe de verrouillage (12) puisse être amené par rotation du manchon de serrage (9) par rapport à la bague de serrage (8) dans le sens de rotation correspondant à la fermeture du mandrin, de la position non-encliquetée dans la position encliquetée et inversement, et en ce qu'il est prévu entre le manchon de serrage (9) et la bague de serrage (8),un dispositif d'encliquetage (17) qui présente deux positions d'encliquetage dans la direction périphérique, l'organe de verrouillage (12), dans l'une des position d'encliquetage, se trouvant dans la position qui correspond à l'état en prise dans les évidements de verrouillage (10) et, dans l'autre position d'encliquetage, se trouvant dans la position qui correspond à l'état hors de prise.

4. Mandrin porte-foret selon une des revendications 1 à 3, caractérisé en ce que la bague de serrage (8) comporte une bague intermédiaire (18) coaxiale, qui forme un moyen de guidage pour la bague de serrage (8), porte les éléments côté bague de serrage des butées (16', 16") pour le manchon de serrage (9) du dispositif de verrouillage (10,12) et du dispositif d'encliquetage (17) et comprend une partie collet (18') qui entoure en étant solidaire en rotation de celle-ci la partie de la bague de serrage (8) portant le filetage de serrage (7).

5. Mandrin de perçage selon la revendication 4, caractérisé en ce que la partie de la bague de serrage (8) portant le filetage de serrage (7) est formée de deux moitiés de bague, qui sont maintenues assemblées sur le corps de mandrin (1) par la partie formant collet (18').

6. Mandrin de perçage selon une des revendications 1 à 5, caractérisé en ce qu'il est prévu pour les butées (16', 16") entre le manchon de serrage (9) et la bague de serrage (8), au moins une pièce de butée (29) sur un élément, c'est-à-dire sur la bague de serrage (8) ou sur le manchon de serrage (9), et une échancrure (30) recevant la pièce de butée (29) sur l'autre élément, la pièce de butée (29), aux extrémités de la course de rotation, venant en butée avec l'une des deux faces frontales qui délimitent l'échancrure (20) dans la direction périphérique.

7. Mandrin de perçage selon la revendication 6, caractérisé en ce que, lorsque la bague de serrage (8) comporte une bague intermédiaire (18), la pièce de butée (29) est réalisée sous la forme d'une partie de paroi de la bague intermédiaire (18) qui depuis le bord de la bague intermédiaire fait saillie axialement dans l'échancrure (30) ménagée dans la face intérieure de la paroi du manchon de serrage (9).

8. Mandrin de perçage selon une des revendications 1 à 7, caractérisé en ce que le dispositif d'encliquetage (17) est formé d'éléments d'encliquetage, c'est-à-dire de l'organe d'encliquetage (38") ou de l'évidement d'encliquetage (17"), sur la bague de serrage et sur le manchon de serrage (9), qui viennent en prise l'un avec l'autre dans les positions d'encliquetage et en ce que la bague de serrage (8) porte au moins une lame élastique (34) qui s'étend dans la direction périphérique, sur laquelle est disposé au moins l'un des éléments d'encliquetage.

9. Mandrin de perçage selon la revendication 7, caractérisé en ce que, l'organe de verrouillage (12) est disposé sur un bras élastique (36) s'étendant dans la direction périphérique de la bague de serrage (8), le bras élastique (36), dans la position encliquetée de l'organe de verrouillage (12), étant en contact avec la came de commande (35), à une distance de l'organe de verrouillage (12) qui autorise le fléchissement élastique du bras (36), au niveau de l'organe de verrouillage (12), de la valeur de sa profondeur de pénétration dans les évidements de verrouillage (10).

10. Mandrin de perçage selon les revendications 8 et 9, caractérisé en ce que la lame élastique (34) et le bras élastique (36) sont formés par un étrier élastique (38) qui s'étend dans la direction périphérique, est solidaire en rotation de la bague de serrage (8) et sur lequel sont prévus deux saillies (38', 38") mutuellement espacées dans la direction périphérique, parmi lesquelles la saillie (38') côté organe de verrouillage forme l'appui du bras élastique (36) sur la came de commande (35) et l'autre saillie (38") forme l'organe d'encliquetage du dispositif d'encliquetage (17), dont les évidements d'encliquetage (17") sont aménagés dans le manchon de serrage (9).

11. Mandrin de perçage selon la revendication 10, caractérisé en ce que l'étrier élastique (38) est formé d'une bande à ressort et en ce que l'organe de verrouillage (12) est formé directement par l'extrémité arrière de la bande à ressort, vu dans la direction de rotation de la bague de serrage (8), qui correspond à la fermeture du mandrin de perçage.

12. Mandrin de perçage selon la revendication 11, caractérisé en ce que les saillies (38', 38") se présentent sous la forme de bombements venus par pliage de la bande à ressort.

13. Mandrin de perçage selon la revendication 1 1 ou 12, caractérisé en ce que l'étrier élastique (38) est monté dans une fente (94), qui s'étend dans la direction périphérique entre le corps de mandrin (1) et le manchon de serrage (9) et est freiné en rotation sur la bague de serrage (8) par un moyen de freinage positif.

14. Mandrin de perçage selon la revendication 13, caractérisé en ce que l'étrier élastique (38) est disposé dans la fente (94) avec la surface de la bande à ressort dirigée radialement par rapport à l'axe de mandrin (3) et en ce que les évidements de verrouillage (10) s'étendent radialement dans une surface annulaire (74) côté corps de mandrin, normale à l'axe de mandrin (3).

15. Mandrin de perçage selon la revendication 14, caractérisé en ce que, dans le cas d'une bague de serrage (8) pourvue d'une bague intermédiaire (18), l'étrier élastique (38) traverse celle-ci dans la direction axiale avec des languettes (49) engagées dans des ouvertures, dont les bords (78) sont en contact avec les languettes (49) dans la direction périphérique.

16. Mandrin de perçage selon la revendication 11 ou 12, caractérisé en ce que, dans le cas d'une bague de serrage (8) pourvue d'une bague intermédiaire (18), l'étrier élastique (38) dont la surface de bande est orientée parallèlement à l'axe de mandrin (3) est disposé dans une fente annulaire (83), qui s'étend dans la direction périphérique entre le corps de mandrin (1) et la bague intermédiaire (18) et est limitée, côté corps de mandrin, par la couronne des évidements de verrouillage (10) axiaux, et en ce que l'étrier élastique (38) est appliqué avec une précontrainte dirigée vers l'extérieur contre la bague intermédiaire (18) et traverse avec ses deux saillies (38', 38") la bague intermédiaire (18) dans des fenêtres (39', 39") dans lesquelles l'étrier élastique (38) est tenu en rotation.

17. Mandrin de perçage selon la revendication 16, caractérisé en ce que la fente annulaire (83), dans la direction radiale, a une largeur supérieure à l'épaisseur de l'étrier élastique (38), en ce que l'étrier élastique (38) prend appui radialement vers l'extérieur sur la bague intermédiaire (18) avec une zone de sommet (31) située sensiblement au milieu entre les deux saillies (38', 38") et forme chaque fois entre cette zone de sommet (31) et les deux saillies (38', 38") une branche élastique (34) destinée à venir en appui tangentiel sur la couronne des évidements de verrouillage (10).

18. Mandrin de perçage selon la revendication 17, caractérisé en ce que la saillie (38") qui forme l'organe d'encliquetage, au niveau de son côté éloigné de la zone de sommet (31) de l'étrier élastique (38), porte une branche élastique (71) qui est appliquée avec précontrainte tangentiellement contre la couronne des évidements de verrouillage (10).

19. Mandrin de perçage selon une des revendication 16 à 18, caractérisé en ce que, l'étrier élastique (38), dans la région du sommet (31) entre ses deux saillies (38', 38"), comporte une troisième saillie (38"') qui traverse la bague intermédiaire (18) à travers une fenêtre (39"') supplémentaire, s'engage dans une rainure (70) prévue dans la face intérieure de la paroi du manchon de serrage (9), s'étend dans la direction tangentielle au moins sur la course de rotation maximale possible du manchon de serrage (9) par rapport à la bague de serrage (8) et forme avec l'une au moins de ses parois latérales une butée axiale pour la saillie (38"') empêchant le déplacement axial du manchon de serrage (9) sur la bague de serrage (8).
